Europäisches Patentamt

European Patent Office

Office européen des brevets

(19)

(11) Veröffentlichungsnummer: **0 203 502**
**B1**

(12) **EUROPÄISCHE PATENTSCHRIFT**

(45) Veröffentlichungstag der Patentschrift:
29.11.89

(51) Int. Cl.⁴: **B26D 1/24**, B26D 7/26

(21) Anmeldenummer: **86106859.1**

(22) Anmeldetag: **20.05.86**

(54) Schneidaggregat für blattförmige Gebilde, insbesondere Papier in Schuppenform.

(30) Priorität: 23.05.85 DE 3518579

(43) Veröffentlichungstag der Anmeldung:
03.12.86 Patentblatt 86/49

(45) Bekanntmachung des Hinweises auf die Patenterteilung:
29.11.89 Patentblatt 89/48

(84) Benannte Vertragsstaaten:
AT CH LI

(56) Entgegenhaltungen:
CH-A- 646 630
DE-A- 2 915 582
DE-A- 3 022 772
DE-A- 3 416 614

(73) Patentinhaber: Gämmerler, Hagen, Ichoring 44,
D-8021 Icking(DE)

(72) Erfinder: Gämmerler, Hagen, Ichoring 44,
D-8021 Icking(DE)

(74) Vertreter: Staeger, Sigurd, Dipl.-Ing. et al,
Patentanwälte Dipl.-Ing. S. Staeger Dipl.-Ing.
Dipl.-Wirtsch.-Ing. R. Sperling Müllerstrasse 31,
D-8000 München 5(DE)

## Beschreibung

Die Erfindung bezieht sich auf ein Schneidaggregat für blattförmige, mindestens zweilagige Flächengebilde, insbesondere Papierprodukte in Schuppenform, mit einem motorisch angetriebenen, rotierenden, an einem Halter angebrachten ersten Messer und einem gegenläufig rotierenden, an einem gesonderten Halter angebrachten, relativ dazu verschwenkbaren zweiten Messer sowie den Messern jeweils zugeordneten Preßbändern o.dgl.

Aus der DE-OS 3 022 772 ist ein Schneidaggregat dieser Art bekannt, bei dem das Schneidmesser mittels eines Lenkers um eine horizontale Achse verschwenkbar ist; durch diese Verschwenkbewegung des ungeschützten Schneidmessers nach oben wird jedoch das Bedienungspersonal gefährdet. Dieses bekannte Schneidaggregat kann auch nicht als eine in sich geschlossene Baueinheit bei bereits bestehenden Papierbearbeitungsanlagen wahlweise ein- oder ausgebaut werden, da etwaige Antriebsorgane einschließlich eines Motors nicht zum Schneidaggregat gehören.

Der Erfindung liegt die Aufgabe zugrunde, ein Schneidaggregat zu schaffen, welches als geschlossene Baueinheit handelsfähig und "an beliebiger Stelle" bei einer bereits vorhandenen Papierbearbeitungsanlage einsetzbar ist.

Die Aufgabe wird dadurch gelöst, daß erfindungsgemäß der Halter des ersten Messers in bezug auf den Halter des zweiten Messers um eine senkrecht zum Produktfluß und zu den Drehachsen der Messer verlaufenden Achse schwenkbar gelagert ist und der Halter des zweiten Messers L- oder U-förmig ausgebildet und den Halter des ersten Messers in Wirkstellung aufnimmt.

Nach einer bevorzugten Ausführungsform der Erfindung ist jedem Halter ein gezahntes Antriebsorgan zugeordnet und sind die beiden Antriebsorgane miteinander kuppelbar. Bei Einsatz von Zahnrädern ist selbstverständlich nur eine Zahnradzahl verwendbar, die durch zwei teilbar ist.

Die Antriebsorgane können aus mindestens je einem Hauptritzel und je einem mindestens einseitig gezahnten Antriebsband o.dgl. bestehen. Hierdurch wird die Kuppelbarkeit der Antriebsorgane besonders einfach und dennoch ein praktisch schlupffreier Antrieb gewährleistet.

Mindestens ein Preßband o.dgl. ist vorzugsweise mit dem Antriebsband o.dgl. antreibbar. Selbstverständlich können auch beide Preßbänder vom selben Antriebsorgan aus, jedoch mit gegenläufiger Förderbewegung angetrieben werden.

Zweckmäßigerweise ist das dem Schneidmesser zugeordnete Preßband o.dgl. gegebenenfalls mit seinem Antrieb an einer von seinem Halter lösbaren Platte o.dgl. angebracht.

Das Antriebsrad o.dgl. des Schneidmessers kann um eine Achse des Hauptritzels eines Antriebsorgans verschwenkbar sein.

Die Achsen des Messers sind bevorzugterweise gleichzeitig Achsen der Hauptritzel; der schwenkbare Halter kann in der Höhe verstellbar sein. Auf diese Weise ist es möglich, bei einem etwaigen nachzuschleifenden Schneidmesser letzteres genau an das Gegenmesser anzupassen.

Auch ist es möglich, daß die Achse des Gegenmessers als Hohlachse zur Aufnahme einer Übertragungswelle zu einem weiteren Schneidaggregat ausgebildet ist.

Beide Messer und deren Preßbänder o.dgl. können auf einer Seite und die Antriebsorgane auf der anderen Seite der Halter angeordnet sein.

Zweckmäßigerweise ist ein einziger Antriebsmotor vorgesehen.

Nach einer in der Praxis verwendeten Ausführungsform wird eine äußerst gedrängte Bauweise dadurch erreicht, daß die Abmessungen des Schneidaggregats in etwa folgende sind:

Länge ca. 50–80 cm,
Höhe ca. 50–60 cm und
Breite ca. 20–30 cm.

In der Zeichnung ist eine beispielsweise Ausführungsform der Erfindung in stark schematisierter Form dargestellt; sie wird nachfolgend näher beschrieben. Es zeigt:

Fig. 1 eine Seitenansicht auf das Schneidaggregat,
Fig. 2 eine Draufsicht auf das Schneidaggregat,
Fig. 3 ein Detail der Antriebsorgane,

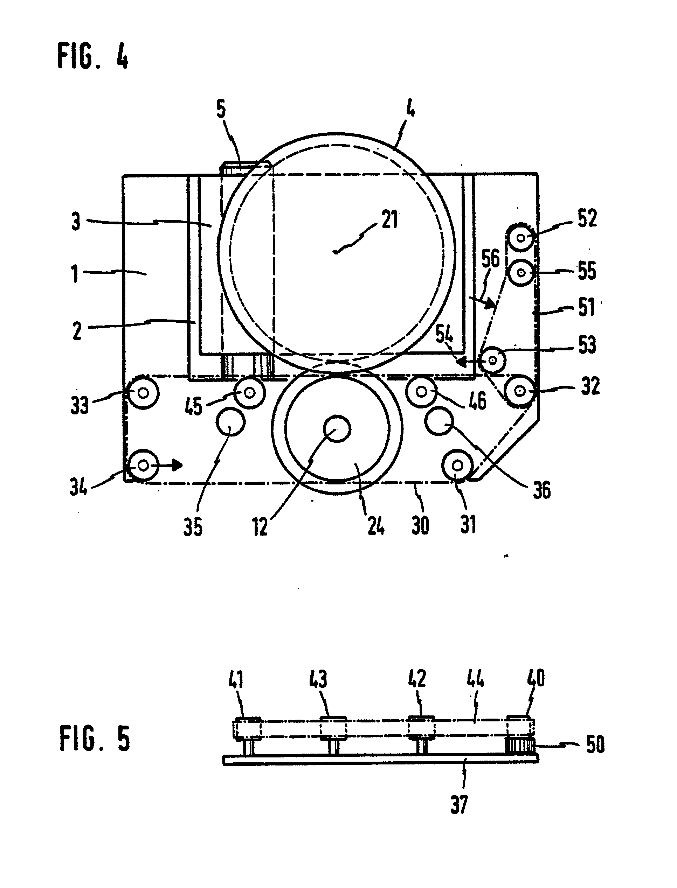

Fig. 4 eine Seitenansicht auf das Antriebsaggregat auf die gegenüberliegende Seite desselben und
Fig. 5 ein Detail.

Ein zum Beispiel 80 cm langer und ca. 60 cm hoher U-förmiger Rahmen ist als Halter 1 für das Gegenmesser ausgebildet und weist eine rechteckige Aussparung 2 zur Aufnahme eines annähernd rechteckig ausgebildeten Halters 3 für ein Schneidmesser 4 auf.

Der Halter 3 ist auf einer vertikal verlaufenden Säule 5 in Pfeilrichtung 6 verschwenkbar gelagert; es ist ohne weiteres eine Verschwenkung um beispielsweise 90° möglich.

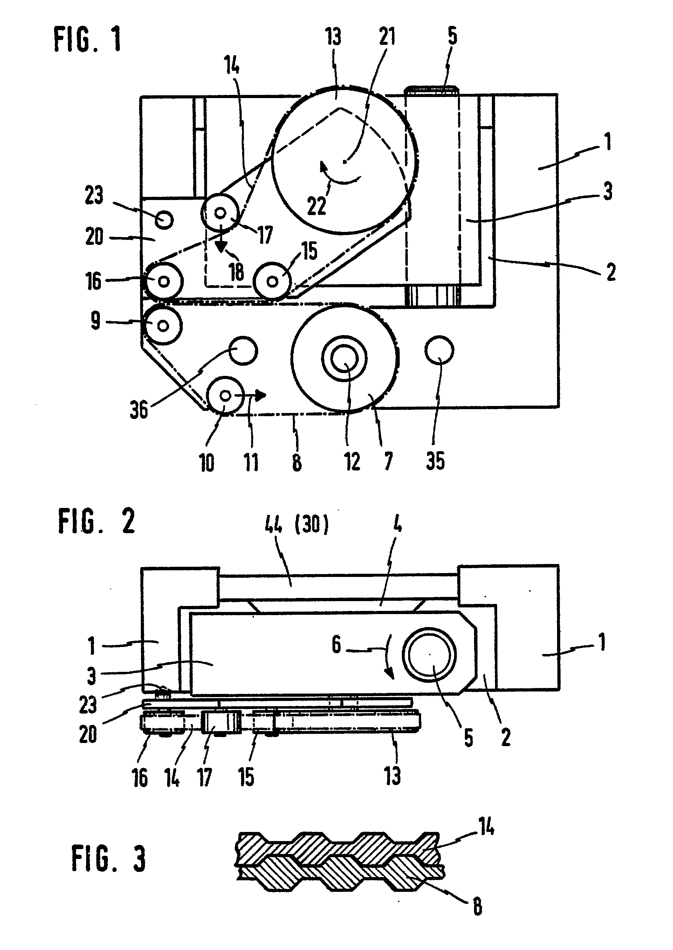

Nach Figur 1 ist auf dem Halter 1 ein Hauptritzel 7 drehbar gelagert, welches z.B. durch einen Elektromotor angetrieben werden kann.

Um das Hauptritzel 7 ist ein beidseitig gezahntes Antriebsband 8 herumgeführt, welches um eine Umlenkrolle 9 geführt ist und durch eine Spannrolle 10 gespannt wird. Die Spannrolle 10 ist z.B. auch zum Auswechseln des beidseitig gezahnten Antriebsbandes 8 in Pfeilrichtung 11 verschiebbar gelagert.

Das Hauptritzel 7 weist eine mittige, sich auch durch den Halter 1 erstreckende zylindrische Öffnung auf; diese Öffnung 12 dient zur Aufnahme einer Übertragungswelle zu einer ggfs. auf der gegenüberliegenden Seite der Papierbearbeitungsanlage vorgesehenen weiteren ggfs. spiegelbildgleich ausgebildeten Schneidvorrichtung.

Am Rahmen 3 ist ein Hauptritzel 13 drehbar gelagert, welches ein beidseitig gezahntes Antriebsband 14 trägt.

Das Antriebsband 14 ist um zwei Umlenkritzel 15 und 16 herumgeführt und kann mittels eines Ritzels 17 in Pfeilrichtung 18 gespannt werden.

Drei Ritzel 15,16,17 sind auf einer Platte 20 angebracht, welche um die Achse 21 des Hauptritzels 13, wie mit Pfeil 22 angedeutet, verschwenkbar ist. Diese Verschwenkbarkeit ermöglicht ein Lösen der beiden Verzahnungen der Antriebsbänder 8 und 14 in annähernd vertikaler Richtung und bei einem Herabschwenken der Platte 20 ein Ineinander-in-Eingriffbringen der jeweiligen Zähne.

Ein Raststift 23 arretiert die Platte 20 in Wirkstellung und greift in eine entsprechende Bohrung im Rahmen 1 ein.

Während die Antriebsorgane darunter auf der einen Seite der beiden Halter 1 und 3 angeordnet sind, sind die etwaigen Pressbänder und die beiden Messer auf der gegenüberliegenden Seite vorgesehen.

Auf der Seite des Gegenmessers ist das untere Pressband 30 angeordnet; dieses kann an seiner Innenseite mit Zähnen versehen sein oder auf andere Weise angetrieben werden.

Das untere Pressband 30 läuft über Umlenkwalzen oder Rollen 31,32, 33 und 34, wobei letztere in Richtung auf das Gegenmesser 24 verstellbar ist und somit als Spannrolle oder Spannwalze ausgebildet ist.

Der Rahmen 1 ist mit durchgehenden Bohrungen 35 und 36 versehen, durch welche eine Anbringung des Schneidaggregats mittels Stangen o.dgl. an einer Papierbearbeitungsanlage möglich ist.

Das obere Pressband ist an einer an der Messerseite montierbaren Platte 37 angebracht und weist z.B. Umlenkrollen 40 und 41 auf. Im Kontaktbereich mit dem unteren Pressband 30 sind Abstützrollen 42,43 vorgesehen. Das obere Pressband 44 muß mindestens im Bereich der Stützrollen 45 und 46 des unteren Pressbandes 30 mit letzterem in Berührung stehen bzw. die blattförmigen Produkte oder Gebilde, vornehmlich Papierprodukte, in diesem Bereich zusammendrücken und bekannterweise einen glatten Schnitt mit dem Schneidmesser 4 ermöglichen.

Das Schneidmesser 4 ist so gelagert, daß es mit dem Halter 3 in Pfeilrichtung 6 verschwenkt werden kann.

Auf der gleichen Achse der Umlenkrolle 40 ist ein Ritzel 50 angebracht, um welches wiederum ein beidseitig gezahntes Antriebsband umläuft. Das Antriebsband läuft weiterhin über Umlenkritzel 52 und 53, welch letzteres in Pfeilrichtung 54 zur Spannung des Förderbandes verschoben werden kann. Es kann noch weiteres Ritzel 55 vorgesehen sein.

Das Ritzel 50, welches an der Platte 37 drehbar gelagert ist, greift an der mit Pfeil 56 bezeichneten Stelle von innen am beidseitig gezahnten Antriebsband 51 an und sorgt somit für einen Umlauf des oberen Pressbandes 44 in gegenläufiger Umlaufrichtung wie das untere Pressband 30.

Der Halter 3 ist auf der Säule 5 stufenlos in der Höhe verstellbar, um bei einem etwaigen Nachschleifen des Schneidmessers stets den gewünschten glatten Schnitt zu erreichen.

Das Schneidmesser 4 kann mit einer glatten Schneidfläche oder auch mit Schneidzähnen versehen sein. Das obere Pressband 44 kann auch keinen besonderen eigenen Antrieb aufweisen, sondern nur mit dem angetriebenen Unterband mitlaufen.

## Patentansprüche

1. Schneidaggregat für blattförmige, mindestens zweilagige Flächengebilde, insbesondere Papierprodukte in Schuppenform, mit einem motorisch angetriebenen, rotierenden, an einem Halter (3) angebrachten ersten Messer (4) und einem gegenläufig rotierenden, an einem gesonderten Halter (1) angebrachten, relativ dazu verschwenkbaren zweiten Messer (2, 4) sowie den Messern (4, 24) jeweils zugeordneten Preßbändern (44, 30) od.dgl., dadurch gekennzeichnet, daß der Halter (3) des ersten Messers (4) in bezug auf den Halter (1) des zweiten Messers (24) um eine senkrecht zum Produktfluß und zu den Drehachsen der Messer verlaufenden Achse schwenkbar gelagert ist und der Halter (1) des zweiten Messers (24) L- oder U-förmig ausgebildet und den Halter (3) des ersten Messers (4) in Wirkstellung aufnimmt.

2. Schneidaggregat nach Anspruch 1, dadurch gekennzeichnet, daß jedem Halter (3, 1) ein gezahntes Antriebsorgan (7, 8, 13, 14) zugeordnet ist und die beiden Antriebsorgane miteinander kuppelbar sind.

3. Schneidaggregat nach Anspruch 2, dadurch gekennzeichnet, daß die Antriebsorgane aus mindestens je einem Hauptritzel (7, 13) und je einem mindestens einseitig gezahnten Antriebsband (8, 14) od.dgl. bestehen.

4. Schneidaggregat nach einem oder mehreren der Ansprüche 1 bis 3, dadurch gekennzeichnet, daß mindestens ein Preßband (44, 30) od.dgl. mit dem Antriebsrad (8, 14) od.dgl. antreibbar ist.

5. Schneidaggregat nach einem oder mehreren der Ansprüche 1 bis 4, dadurch gekennzeichnet, daß das dem Schneidmesser (4) zugeordnete Preßband (44) od.dgl. ggfs. mit seinem Antrieb an einer von seinem Halter (4) lösbaren Platte (20) od.dgl. angebracht ist.

6. Schneidaggregat nach einem oder mehreren der Ansprüche 1 bis 5, dadurch gekennzeichnet, daß das Antriebsband (14) od.dgl. des Schneidmessers (4) um eine Achse verschwenkbar ist.

7. Schneidaggregat nach einem oder mehreren der Ansprüche 1 bis 6, dadurch gekennzeichnet, daß die Achsen (21, 12) der Messer (4, 24) gleichzeitig Achsen der Hauptritzel (13, 7) sind.

8. Schneidaggregat nach einem oder mehreren der Ansprüche 1 bis 7, dadurch gekennzeichnet, daß der verschwenkbare Halter (3) in der Höhe verstellbar ist.

9. Schneidaggregat nach einem oder mehreren der Ansprüche 1 bis 8, dadurch gekennzeichnet, daß die Achse des Gegenmessers (24) als Hohlachse (2) zur Aufnahme einer Übertragungswelle zu einem weiteren Schneidaggregat ausgebildet ist.

10. Schneidaggregat nach einem oder mehreren der Ansprüche 1 bis 9, dadurch gekennzeichnet, daß beide Messer (4, 24) und deren Preßbänder (44, 30) od.dgl. auf einer Seite und die Antriebsorgane (7, 8, 13, 14) auf der anderen Seite der Halter (3, 1) angeordnet sind.

11. Schneidaggregat nach einem oder mehreren der Ansprüche 1 bis 10, dadurch gekennzeichnet, daß ein einziger Antriebsmotor vorgesehen ist.

## Claims

1. Cutting unit for sheet-type flat items consisting of at least two layers, especially paper products in flake form, with a motor-driven, rotating first knife (4), fitted in a mounting (2), and a counter-rotating second knife (24), fitted in a separate mounting (1), which could be swivelled relative to the latter and compression belts or similar (44, 30) each allocated to the respective knives (4, 24) characterised by the fact that the mounting (3) of the first knife (4) is fitted so that it can swivel with reference to the mounting (1) of the second knife (24) around an axle which runs vertical to the product flow and to the axis of rotation of the knives and that the mounting (1) of the second knife (24) is U- or L-shaped and holds the mounting (3) of the first knife (4) in its operating position.

2. Cutting unit in accordance with claim 1, characterised by the fact that a toothed drive unite (7, 8, 13, 14) is allocated to each mounting (3, 1) and that the two drive units can be connected together.

3. Cutting unit in accordance with claim 2, characterised by the fact that the drive units consist of at least one main pinion (7, 13) respectively and one drive belt (8, 14) or similar with teeth on at least one side.

4. Cutting unit in accordance with at least one of the claims 1 to 3, characterised by the fact that at least one compression belt (44, 30) or similar can be driven by the drive belt (8, 14) or similar.

5. Cutting unit in accordance with one or more of the claims 1 to 4, characterised by the fact that the compression belt (44) or similar allocated to the cutting knife (4) is attached, with its drive if present, on a plate (20) which can be detached from its mounting (4).

6. Cutting unit in accordance with one or more of the claims 1 to 5, characterised by the fact that the drive belt (14) or similar of the cutting knife (4) can be swivelled around one axle (21) of the main pinion (13) of a drive unit.

7. Cutting unit in accordance with one or more of the claims 1 to 6, characterised by the fact that the axles (21, 12) of the knives (4, 24) are simultaneously axles of the main pinion (13, 7).

8. Cutting unit in accordance with one or more of the claims 1 to 7, characterised by the fact that the swivelling mounting (3) is height-adjustable.

9. Cutting unit in accordance with one or more of the claims 1 to 8, characterised by the fact that the axle of the counter-rotating knife (24) is designed as a hollow axle (2) to take a transmission shaft to a further cutting unit.

10. Cutting unit in accordance with one or more of the claims 1 to 9, characterised by the fact that both knives (4, 24) and their compression belts (44, 30) or similar are arranged on one side of the mountings (3, 1) and the drive units (7, 8, 13, 14) are on the other.

11. Cutting unit in accordance with one or more of the claims 1 to 10, characterised by the fact that a single drive motor is provided.

## Revendications

1. Coupeuse pour produit en feuilles à au moins deux couches, en particulier papier lamellaire, avec une première lame (4) rotative, entraînée par un moteur, montée sur un support (3) et une deuxième lame (24) tournant en sens inverse, montée sur un support (1) particulier, pouvant pivoter par rapport à ce support, et avec des bandes presseuses (44, 30) ou éléments analogues, associées respectivement aux lames (4, 24), caractérisée en ce que le support (3) de la première lame (4) est monté pivotant pour rapport au support (1) de la deuxième lame (24) autour d'un axe orienté perpendiculairement à l'écoulement du produit et aux axes de rotation des lames, et que le support (1) de la deuxième lame (24) présente une configuration en L ou en U et reçoit le support (3) de la première lame (4) en position d'action.

2. Coupeuse selon la revendication 1, caractérisée en ce qu'à chaque support (3, 1) est attribué un organe d'entraînement (7, 8, 13, 14) denté et que les deux organes d'entraînement peuvent être couplés l'un à l'autre.

3. Coupeuse selon la revendication 2, caractérisée en ce que les organes d'entraînement sont constitué chacun d'au moins un pignon principal (7, 13) et d'au moins une bande d'entraînement (8, 14) dentée d'un côté ou élément analogue.

4. Coupeuse selon une ou plusieurs des revendications 1 à 3, caractérisée en ce qu'au moins une bande presseuse (44, 30) ou élément analogue peut être entraînée par la bande d'entraînement (8, 14) ou élément analogue.

5. Coupeuse selon une ou plusieurs des revendications 1 à 4, caractérisée en ce que la bande presseuse (44) ou élément analogue associée à la lame de coupe (4), est montée éventuellement avec sa commande d'entraînement, sur une plaque (20) ou élément analogue séparable de son support (4).

6. Coupeuse selon une ou plusieurs des revendications 1 à 5, caractérisée en ce que la bande presseuse (14) ou élément analogue de la lame de coupe (4) peut pivoter autour d'un axe (21) du pignon principal (13) d'un organe d'entraînement.

7. Coupeuse selon une ou plusieurs des revendications 1 à 6, caractérisée en ce que les axes (21, 12) des lames (4, 24) sont en même temps les axes des pignons principaux (13, 7).

8. Coupeuse selon une ou plusieurs des revendications 1 à 7, caractérisée en ce que le support pivotant (3) est réglable en hauteur.

9. Coupeuse selon une ou plusieurs des revendications 1 à 8, caractérisée en ce que l'axe de la contre-lame (24) a la configuration d'un axe creux (2) pour recevoir un arbre de transmission aboutissant à une deuxième coupeuse.

10. Coupeuse selon une ou plusieurs des revendications 1 à 9, caractérisée en ce que les deux lames (4, 24) et leurs bandes presseuses (44, 30) ou éléments analogues sont disposés d'un côté des supports (3, 1) et les organes d'entraînement (7, 8, 13, 14) de l'autre côté des supports.

11. Coupeuse selon une ou plusieurs des revendications 1 à 10, caractérisée en ce qu'il est prévu un seul moteur d'entraînement.

FIG. 1

13 21 5

14

23

20

17

16

9

22

1

3

2

15

18

36

10

11

8

12

7

35

FIG. 2

44 (30)

4

1

3

23

20

1

6

5

2

16 14 17 15

13

FIG. 3

14

8

# FIG. 4

# FIG. 5